# EUROPEAN PATENT APPLICATION

(11) **EP 4 583 332 A1**
(43) Date of publication of application: **09.07.2025**
(21) Application number: 24150582.5
(22) Date of filing: 05.01.2024
(51) Int. Cl.: H02B 1/56, H02G 5/10

(54) **COLOURED PRINTING OF SWITCHGEARS PARTS**

(71) Applicant: ABB SCHWEIZ AG, 5400 Baden (CH)
(72) Inventor: SOBALLA, Sebastian, 44388 Dortmund (DE); CLAUS, Oliver, 40885 Ratingen (DE)
(74) Representative: Maiwald GmbH

(57) **Abstract**

The present invention relates to a metal wall (60) for a compartment (20, 30, 40, 50) of a switchgear (100);
wherein the metal wall comprises a stainless steel sheet;
wherein at least a portion of a surface of the stainless steel sheet of the metal wall that faces outwards when the metal wall forms the compartment of the switchgear has a coloured coating; and
wherein the coloured coating has been applied by a printer.

## Description

### FIELD OF THE INVENTION

The present invention relates to a metal wall for a compartment of a switchgear that has a printed colour coating, a metal conductor for a switchgear that has a printed colour coating, a method of processing a metal wall for a compartment of a switchgear, a method of processing a metal conductor of a switchgear, and a switchgear.

### BACKGROUND OF THE INVENTION

Heat is required to be dissipated from switchgears, and this is achieved through the use of wet paint to increase the emissivity of the surfaces of parts that can then radiate energy away from the switchgear.

With respect to metal walls form the compartment walls of a switchgear, these walls are first welded to form a compartment, then parts of the compartment that are not permitted to be painted, such as welded seals, and studs, are masked manually and then the walls are painted.

The process of masking and painting is time consuming and costly, and the seals have to be tight as tested before painting after painting to verify the integrity of the seals.

There is a need to address these issues.

There is a need to improve how to provide for increased heat dissipation from switchgears.

### SUMMARY OF THE INVENTION

Therefore, it would be advantageous to provide for increased heat dissipation from switch gears.

The object of the present invention is solved with the subject matter of the independent claims, wherein further embodiments are incorporated in the dependent claims.

In a first aspect, there is provided a metal wall (60) for a compartment (20, 30, 40, 50) of a switchgear (100). The metal wall comprises a stainless steel sheet. At least a portion of a surface of the stainless steel sheet of the metal wall that faces outwards when the metal wall forms the compartment of the switchgear has a coloured coating. The coloured coating has been applied by a printer.

Thus, walls of the compartment of a switchgear, such as flat sidewalls, that are sheet metal made of stainless steel, can have an appropriate coloured coating printed on the surface before the metal shields are welded to form a compartment. The compartment can then have an appropriate colour facing outwards, to enhance radiation emission from the switchgear and thus a cooling. The whole process of effecting this ability to diffuse energy from the switchgear, is greatly simplified over the existing processes, because the design could be programmed in advance, and the manual masking process required for painting is not now required, and the process can be achieved in house, and with different colours as required applied.

In an example, at least a portion of a surface of the stainless steel sheet of the metal wall that faces inwards when the metal wall forms the compartment of the switchgear has a coloured coating; and wherein the coloured coating has been applied by the printer.

By having the inward facing surfaces of the walls of the compartments of the switchgear printed to have a colour, such as black, the walls absorb heat from the internal parts of the switchgear, which are hotter than the walls. The walls also having an outward facing printed surface that enhances energy emission from the switchgear, leads to an overall increase in heat loss from the switchgear.

In an example, the stainless steel sheet comprises at least one hole, and wherein the surface of the stainless steel sheet of the metal wall that faces outwards when the metal wall forms the compartment of the switchgear that is a perimeter of one or more holes of the at least one hole does not have the coloured coating.

Thus, the printer can be programmed to print up to a certain distance from holes in the stainless steel metal sheets, thereby enabling connectors to be applied in an effective manner mating against bare metal, and this means that the whole process is made more efficient, and cost-effective.

In an example, the surface of the stainless steel sheet of the metal wall that faces inwards when the metal wall forms the compartment of the switchgear that is a perimeter of one or more holes of the at least one hole does not have the coloured coating.

In an example, the surface of the stainless steel sheet of the metal wall that faces outwards when the metal wall forms the compartment of the switchgear that is at one or more of outer perimeters of the stainless steel sheet does not have the coloured coating.

Thus, the printer can be programmed to print up to a certain distance from edges the stainless steel metal sheets, thereby enabling the metal sheets to be welded together in an effective manner where bare metal to bare metal is required for weld integrity, and this means that the whole process is made more efficient, and cost-effective.

In an example, the surface of the stainless steel sheet of the metal wall that faces inwards when the metal wall forms the compartment of the switchgear that is at one or more of outer perimeters of the stainless steel sheet does not have the coloured coating.

In an example, the coloured coating of the surface of the stainless steel sheet of the metal wall that faces outwards when the metal wall forms the compartment of the switchgear comprises ink.

In an example, the coloured coating of the surface of the stainless steel sheet of the metal wall that faces inwards when the metal wall forms the compartment of the switchgear comprises ink.

In an example, the coloured coating of the surface of the stainless steel sheet of the metal wall that faces outwards when the metal wall forms the compartment of the switchgear is configured to have a high emissivity.

In an example, the coloured coating of the surface of the stainless steel sheet of the metal wall that faces inwards when the metal wall forms the compartment of the switchgear is configured to have a high emissivity.

In an example, the coloured coating is for example coloured one of: black, grey, white. Other colours can be utilized.

Thus, the coloured coating can be an ink printed by the printer, and can be the appropriate colour as required, such as black, grey or white, where black is the most efficient black-body emitter but a white surface still exhibits increased emissivity over a bare metal surface, and the parts can be coloured as required.

In a second aspect, there is provided a metal conductor (1, 2) for a switchgear (100). The metal conductor comprises a copper busbar. At least a portion of a surface of copper busbar has a coloured coating. The coloured coating has been applied by a printer.

Thus, copper busbars of a switchgear, that get very hot due to Joule heating, can have an appropriate coloured coating printed on the surface to increase radiative heat emission from the busbars and thus cool them. The whole process of effecting this ability to diffuse energy is greatly simplified over the existing processes, because the design could be programmed in advance, and parts that should not have a coating can be easily left bare through programming of the printer manual masking required for painting is not now required, and the process can be achieved in house, and with different colours as required applied.

In an example, the copper busbar comprises at least one hole, and wherein the surface of the copper busbar that is a perimeter of one or more holes of the at least one hole does not have the coloured coating.

In an example, the surface of the copper busbar that is at an end of the copper busbar does not have the coloured coating.

In an example, the coloured coating of the surface of the copper busbar comprises ink.

In an example, the coloured coating of the surface of the copper busbar is configured to have a high emissivity.

In an example, the coloured coating is for example coloured one of: black, grey, white. Other colours can be utilized.

In a third aspect, there is provided a method of processing a metal wall (60) for a compartment (20, 30, 40, 50) of a switchgear (100), wherein the metal wall comprises a stainless steel sheet, and wherein the method comprises:
- applying, by a printer, a coloured coating to at least a portion of a surface of the stainless steel sheet of the metal wall that faces outwards when the metal wall forms the compartment of the switchgear.

In an example, the method comprises;
- applying, by the printer, a coloured coating to at least a portion of a surface of the stainless steel sheet of the metal wall that faces inwards when the metal wall forms the compartment of the switchgear

In an example, the stainless steel sheet comprises at least one hole, and wherein the method comprises:
- not applying, by the printer, the coloured coating to a perimeter of one or more holes of the at least one hole does of the surface of the stainless steel sheet of the metal wall that faces outwards when the metal wall forms the compartment of the switchgear.

In an example, the stainless steel sheet comprises at least one hole, and wherein the method comprises:
- not applying, by the printer, the coloured coating to a perimeter of one or more holes of the at least one hole does of the surface of the stainless steel sheet of the metal wall that faces inwards when the metal wall forms the compartment of the switchgear.

In an example, the method comprises:
- not applying, by the printer, the coloured coating to one or more of outer perimeters of the stainless steel sheet of the surface of the stainless steel sheet of the metal wall that faces outwards when the metal wall forms the compartment of the switchgear.

In an example, the method comprises:
- not applying, by the printer, the coloured coating to one or more of outer perimeters of the stainless steel sheet of the surface of the stainless steel sheet of the metal wall that faces inwards when the metal wall forms the compartment of the switchgear.

In an example, the coloured coating of the surface of the stainless steel sheet of the metal wall that faces outwards when the metal wall forms the compartment of the switchgear comprises ink.

In an example, the coloured coating of the surface of the stainless steel sheet of the metal wall that faces inwards when the metal wall forms the compartment of the switchgear comprises ink.

In an example, the coloured coating of the surface of the stainless steel sheet of the metal wall that faces outwards when the metal wall forms the compartment of the switchgear is configured to have a high emissivity.

In an example, the coloured coating of the surface of the stainless steel sheet of the metal wall that faces inwards when the metal wall forms the compartment of the switchgear is configured to have a high emissivity.

In an example, prior to printing the method comprises pre-treating one or more surfaces of the stainless steel sheet with a primer.

In an example, the method comprises illuminating the coloured coating with UV radiation as it is being printed and/or illuminating the coloured coating with UV radiation after it has been printed.

In an example, the coloured coating is for example coloured one of: black, grey, white. Other colours can be utilized.

In a fourth aspect, there is provided a method of processing a metal conductor (1, 2) for a switchgear (100), wherein the metal conductor comprises a copper busbar, and wherein the method comprises:
- applying, by a printer, a coloured coating to at least a portion of a surface of the copper busbar.

In an example, the copper busbar comprises at least one hole, and wherein the method comprises;
- not applying, by the printer, the coloured coating to a perimeter of one or more holes of the at least one hole does of the surface of the copper busbar.

In an example, the method comprises:
- not applying, by the printer, the coloured coating to a surface of the copper busbar that is at an end of the copper busbar.

In an example, the coloured coating of the surface of the copper busbar comprises ink.

In an example, the coloured coating of the surface of the copper busbar is configured to have a high emissivity.

In an example, prior to printing the method comprises pre-treating the surface of the copper busbar with a primer.

In an example, the method comprises illuminating the coloured coating with UV radiation as it is being printed and/or illuminating the coloured coating with UV radiation after it has been printed.

In an example, the coloured coating is for example coloured one of: black, grey, white. Other colours can be utilized.

In a fifth aspect there is provided a switchgear comprising a metal wall according to the first aspect.

In a sixth aspect there is provided a switchgear comprising a metal conductor according to the second aspect.

In a seventh aspect there is provided a switchgear comprising a metal wall processed according to the method of the third aspect.

In an eighth aspect there is provided a switchgear comprising a metal conductor processed according to the method of the fourth aspect.

The above aspect and examples will become apparent from and be elucidated with reference to the embodiments described hereinafter.

### BRIEF DESCRIPTION OF THE DRAWINGS

Exemplary embodiments will be described in the following with reference to the following drawing:
Fig. 1 shows a schematic representation of a switchgear 100 having a plurality of metal walls 60 with coloured coatings applied by a printer;
Fig. 2 shows a detailed schematic representation of a switchgear having a plurality of metal walls 60 with coloured coatings applied by a printer and busbars 1 and 2 with coloured coatings applied by a printer;
Fig. 3 shows a pictorial representation of a switchgear 100 having a plurality of metal walls 60 with coloured coatings applied by a printer and where the coating has not been printed at the perimeter 80 of holes in the metals walls and has not ben printed at the edges 70 of the metal walls;
Fig. 4 shows a detailed representation of a compartment such as a circuit breaker compartment 20, a first busbar compartment 30, a second busbar compartment 40, a low voltage compartment 50 of a switchgear having a plurality of metal walls 60 with coloured coatings applied by a printer and where the coating has not been printed at the perimeter 80 of holes in the metals walls and has not been printed at the edges 70 of the metal walls; and
Fig. 5 shows a detailed representation of a compartment such as a circuit breaker compartment 20, a first busbar compartment 30, a second busbar compartment 40, a low voltage compartment 50 of a switchgear having a plurality of metal walls 60 with coloured coatings applied by a printer and where the coating has not been printed at the perimeter 80 of holes in the metals walls and has not been printed at the edges 70 of the metal walls.

### DETAILED DESCRIPTION OF EMBODIMENTS

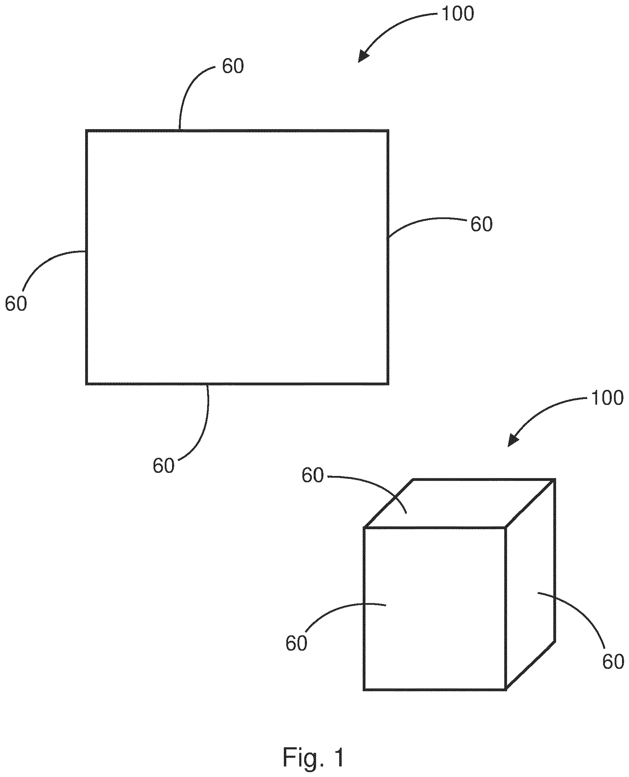

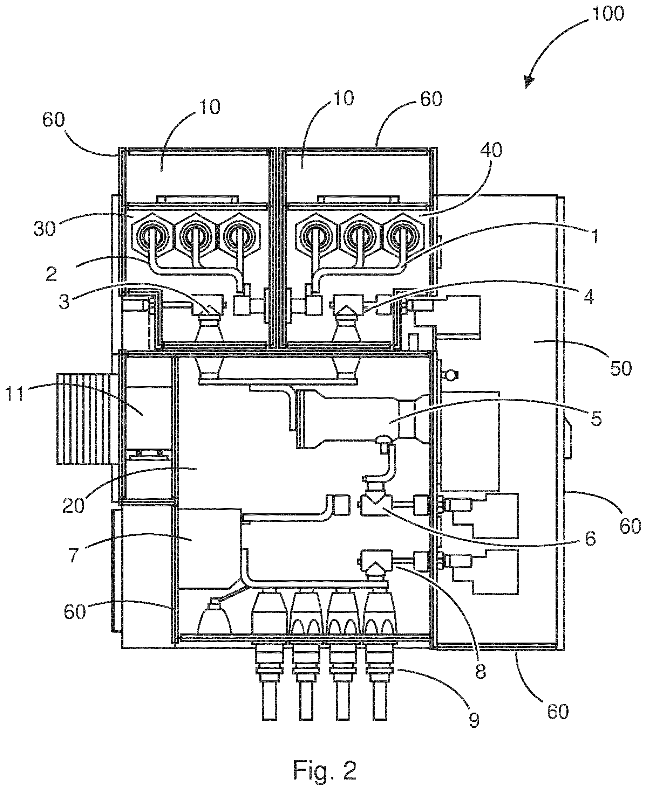

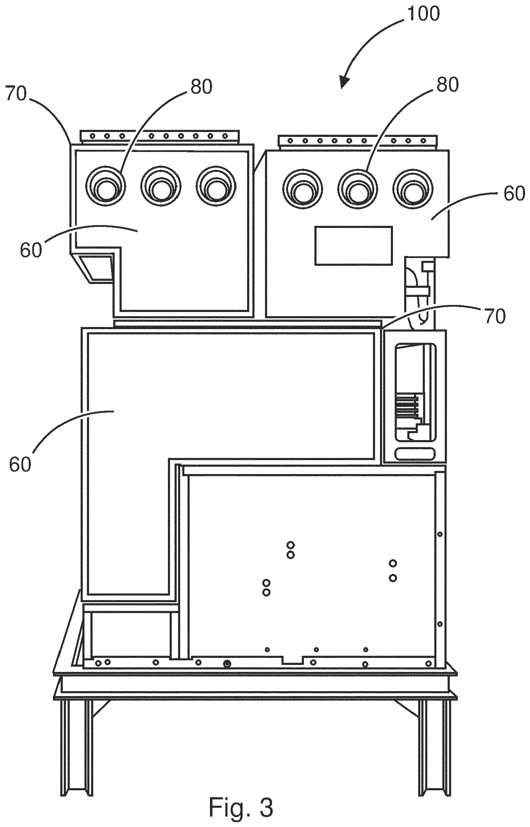

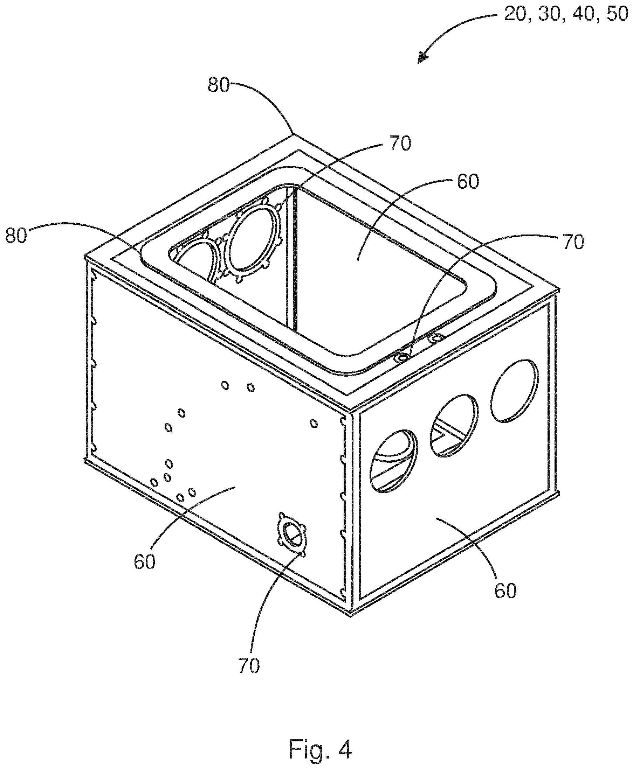

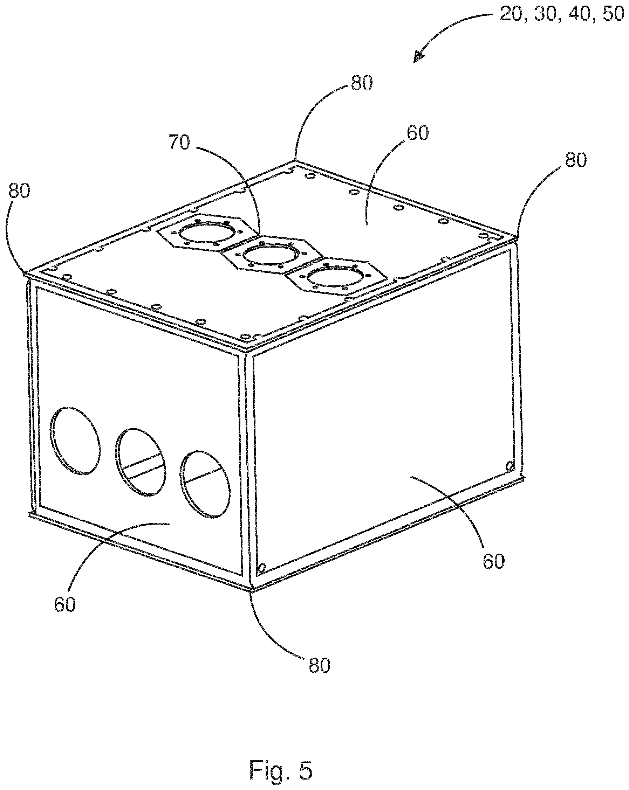

Figs. 1-5 relate to a metal wall for a compartment of a switchgear that has a printed colour coating, a metal conductor for a switchgear that has a printed colour coating, a method of processing a metal wall for a compartment of a switchgear, a method of processing a metal conductor of a switchgear, and a switchgear.

An exemplar metal wall 60 for a compartment 20, 30, 40, 50 of a switchgear 100 is now described. The metal wall comprises a stainless steel sheet. At least a portion of a surface of the stainless steel sheet of the metal wall that faces outwards when the metal wall forms the compartment of the switchgear has a coloured coating. The coloured coating has been applied by a printer.

Thus, walls of the compartment of a switchgear, such as flat sidewalls, that are sheet metal made of stainless steel, can have an appropriate coloured coating printed on the surface before the metal shields are welded to form a compartment. The compartment can then have an appropriate colour facing outwards, to enhance radiation emission from the switchgear and thus a cooling. The whole process of effecting this ability to diffuse energy from the switchgear, is greatly simplified over the existing processes, because the design could be programmed in advance, and the manual masking process required for painting is not now required, and the process can be achieved in house, and with different colours as required applied.

In an example, at least a portion of a surface of the stainless steel sheet of the metal wall that faces inwards when the metal wall forms the compartment of the switchgear has a coloured coating; and wherein the coloured coating has been applied by the printer.

By having the inward facing surfaces of the walls of the compartments of the switchgear printed to have a colour, such as black, the walls absorb heat from the internal parts of the switchgear, which are hotter than the walls. The walls also having an outward facing printed surface that enhances energy emission from the switchgear, leads to an overall increase in heat loss from the switchgear.

In an example, the stainless steel sheet comprises at least one hole, and wherein the surface of the stainless steel sheet of the metal wall that faces outwards when the metal wall forms the compartment of the switchgear that is a perimeter of one or more holes of the at least one hole does not have the coloured coating.

Thus, the printer can be programmed to print up to a certain distance from holes in the stainless steel metal sheets, thereby enabling connectors to be applied in an effective manner mating against bare metal, and this means that the whole process is made more efficient, and cost-effective.

In an example, the surface of the stainless steel sheet of the metal wall that faces inwards when the metal wall forms the compartment of the switchgear that is a perimeter of one or more holes of the at least one hole does not have the coloured coating.

In an example, the surface of the stainless steel sheet of the metal wall that faces outwards when the metal wall forms the compartment of the switchgear that is at one or more of outer perimeters of the stainless steel sheet does not have the coloured coating.

Thus, the printer can be programmed to print up to a certain distance from edges the stainless steel metal sheets, thereby enabling the metal sheets to be welded together in an effective manner where bare metal to bare metal is required for weld integrity, and this means that the whole process is made more efficient, and cost-effective.

In an example, the surface of the stainless steel sheet of the metal wall that faces inwards when the metal wall forms the compartment of the switchgear that is at one or more of outer perimeters of the stainless steel sheet does not have the coloured coating.

In an example, the coloured coating of the surface of the stainless steel sheet of the metal wall that faces outwards when the metal wall forms the compartment of the switchgear comprises ink.

In an example, the coloured coating of the surface of the stainless steel sheet of the metal wall that faces inwards when the metal wall forms the compartment of the switchgear comprises ink.

In an example, the coloured coating of the surface of the stainless steel sheet of the metal wall that faces outwards when the metal wall forms the compartment of the switchgear is configured to have a high emissivity.

In an example, the coloured coating of the surface of the stainless steel sheet of the metal wall that faces inwards when the metal wall forms the compartment of the switchgear is configured to have a high emissivity.

In an example, the coloured coating is for example coloured one of: black, grey, white. Other colours can be utilized.

Thus, the coloured coating can be an ink printed by the printer, and can be the appropriate colour as required, such as black, grey or white, where black is the most efficient black-body emitter but a white surface still exhibits increased emissivity over a bare metal surface, and the parts can be coloured as required.

An exemplar metal conductor 1, 2 for a switchgear 100 is now described. The metal conductor comprises a copper busbar. At least a portion of a surface of copper busbar has a coloured coating. The coloured coating has been applied by a printer.

Thus, copper busbars of a switchgear, that get very hot due to Joule heating, can have an appropriate coloured coating printed on the surface to increase radiative heat emission from the busbars and thus cool them. The whole process of effecting this ability to diffuse energy is greatly simplified over the existing processes, because the design could be programmed in advance, and parts that should not have a coating can be easily left bare through programming of the printer manual masking required for painting is not now required, and the process can be achieved in house, and with different colours as required applied.

It is to be noted that the metal conductor could be other parts of the switchgear such as part of a two-position switch or three-position switch or parts of a circuit breaker, such as a stem, and for all of these parts a coloured coating can be applied to a surface by a printer in the same manner as discussed for the copper busbar.

In an example, the copper busbar comprises at least one hole, and wherein the surface of the copper busbar that is a perimeter of one or more holes of the at least one hole does not have the coloured coating.

In an example, the surface of the copper busbar that is at an end of the copper busbar does not have the coloured coating.

In an example, the coloured coating of the surface of the copper busbar comprises ink.

In an example, the coloured coating of the surface of the copper busbar is configured to have a high emissivity.

In an example, the coloured coating is for example coloured one of: black, grey, white. Other colours can be utilized.

An exemplar method of processing a metal wall 60 for a compartment 20, 30, 40, 50 of a switchgear 100 is now described. The metal wall comprises a stainless steel sheet, and the method comprises:
- applying, by a printer, a coloured coating to at least a portion of a surface of the stainless steel sheet of the metal wall that faces outwards when the metal wall forms the compartment of the switchgear.

In an example, the method comprises;
- applying, by the printer, a coloured coating to at least a portion of a surface of the stainless steel sheet of the metal wall that faces inwards when the metal wall forms the compartment of the switchgear

In an example, the stainless steel sheet comprises at least one hole, and wherein the method comprises:
- not applying, by the printer, the coloured coating to a perimeter of one or more holes of the at least one hole does of the surface of the stainless steel sheet of the metal wall that faces outwards when the metal wall forms the compartment of the switchgear.

In an example, the stainless steel sheet comprises at least one hole, and wherein the method comprises:
- not applying, by the printer, the coloured coating to a perimeter of one or more holes of the at least one hole does of the surface of the stainless steel sheet of the metal wall that faces inwards when the metal wall forms the compartment of the switchgear.

In an example, the method comprises:
- not applying, by the printer, the coloured coating to one or more of outer perimeters of the stainless steel sheet of the surface of the stainless steel sheet of the metal wall that faces outwards when the metal wall forms the compartment of the switchgear.

In an example, the method comprises:
- not applying, by the printer, the coloured coating to one or more of outer perimeters of the stainless steel sheet of the surface of the stainless steel sheet of the metal wall that faces inwards when the metal wall forms the compartment of the switchgear.

In an example, the coloured coating of the surface of the stainless steel sheet of the metal wall that faces outwards when the metal wall forms the compartment of the switchgear comprises ink.

In an example, the coloured coating of the surface of the stainless steel sheet of the metal wall that faces inwards when the metal wall forms the compartment of the switchgear comprises ink.

In an example, the coloured coating of the surface of the stainless steel sheet of the metal wall that faces outwards when the metal wall forms the compartment of the switchgear is configured to have a high emissivity.

In an example, the coloured coating of the surface of the stainless steel sheet of the metal wall that faces inwards when the metal wall forms the compartment of the switchgear is configured to have a high emissivity.

In an example, prior to printing the method comprises pre-treating one or more surfaces of the stainless steel sheet with a primer.

In an example, the method comprises illuminating the coloured coating with UV radiation as it is being printed and/or illuminating the coloured coating with UV radiation after it has been printed.

In an example, the coloured coating is for example coloured one of: black, grey, white. Other colours can be utilized.

An exemplar method of processing a metal conductor 1, 2 for a switchgear 100 is now described. The the metal conductor comprises a copper busbar, and the method comprises:
- applying, by a printer, a coloured coating to at least a portion of a surface of the copper busbar.

In an example, the copper busbar comprises at least one hole, and wherein the method comprises;
- not applying, by the printer, the coloured coating to a perimeter of one or more holes of the at least one hole does of the surface of the copper busbar.

In an example, the method comprises:
- not applying, by the printer, the coloured coating to a surface of the copper busbar that is at an end of the copper busbar.

In an example, the coloured coating of the surface of the copper busbar comprises ink.

In an example, the coloured coating of the surface of the copper busbar is configured to have a high emissivity.

In an example, prior to printing the method comprises pre-treating the surface of the copper busbar with a primer.

In an example, the method comprises illuminating the coloured coating with UV radiation as it is being printed and/or illuminating the coloured coating with UV radiation after it has been printed.

In an example, the coloured coating is for example coloured one of: black, grey, white. Other colours can be utilized.

It is to be noted that a switchgear can have a metal wall with a coloured coating applied as described above.

It is to be noted that a switchgear can have a metal conductor with a coloured coating applied as described above.

Thus, the inventors realised that a large injection printer can be used to print coloured coating onto sheet metal side walls of the compartment of a switchgear, that I used to build up an encapsulation of the switchgear panel when welded together, with the coloured coatings enhancing heat radiation from the switchgear. Critical areas such as scenes that will be welded, and areas around holes that will form seals, can remain uncoated through appropriate programming of the printer. The whole process is very fast, avoids additional manual work, and avoids certain tightness tests and the whole process can be done in-house. The process allows for different kinds of colours to be applied, ranging from black to provide for the most efficient blackbody emission, to white to provide visibility, and even red to signify danger. It has been shown that the thermal emissive performance of a switchgear with sheet metal stainless steel walls having coloured coatings printed in this manner provides for thermal performance comparable to that achieved presently with the costly and time laborious wet paint technique.

The following provides a brief summary of the process of printing the coloured coating:
- The metal part to be printed, such as a sheet metal part, is put onto the printer's bed
- the metal part is pretreated with a primer, for example isopropanol, chemical primer, or the pre-treating with a primer is through pyrolisation (flame)
- the printing programme for the parties loaded into the printer software
- the printing process is started
- the ink used can be a UV activating ink, and after the ink is deposited as wet ink from the printer head onto the part, a UV light illuminates the ink to activate and dry it

The thickness of the ink layer can be in the micro to mm range.

All types of metal parts for the switchgear can be printed in this manner, from coloured coatings on stainless steel sheets, and coloured coatings on conductors such as copper busbars.

A number of different printers can be used, for example but not limited to:
Jetrix1212
Mimaki JFX200 2513 EX
Mimaki UJF-7151 PLUS
swissqprint Impala 4

### Reference Numerals

- 1: Busbar 1
- 2: Busbar 2
- 3: Two position disconnector switch
- 4: Three position disconnector switch
- 5: Circuit breaker
- 6: Three position disconnector switch
- 7: Current transformer
- 8: Grounding switch
- 9: Plug in connectors
- 10: Plenums for busbar compartments
- 20: Circuit breaker compartment
- 30: Busbar compartment 1
- 40: Busbar compartment 2
- 50: low voltage compartment
- 60: Walls of compartments
- 70: Non coloured seem around connector hole
- 80: Non coloured seem around edge of metal sheet
- 100: Switchgear

## Claims

1. A metal wall (60) for a compartment (20, 30, 40, 50) of a switchgear (100);
wherein the metal wall comprises a stainless steel sheet;
wherein at least a portion of a surface of the stainless steel sheet of the metal wall that faces outwards when the metal wall forms the compartment of the switchgear has a coloured coating; and
wherein the coloured coating has been applied by a printer.

2. Metal wall according to claim 1, wherein at least a portion of a surface of the stainless steel sheet of the metal wall that faces inwards when the metal wall forms the compartment of the switchgear has a coloured coating; and wherein the coloured coating has been applied by the printer.

3. Metal wall according to any of claims 1-2, wherein the stainless steel sheet comprises at least one hole, and wherein the surface of the stainless steel sheet of the metal wall that faces outwards when the metal wall forms the compartment of the switchgear that is a perimeter of one or more holes of the at least one hole does not have the coloured coating.

4. Metal wall according to any of claims 1-3, wherein the surface of the stainless steel sheet of the metal wall that faces outwards when the metal wall forms the compartment of the switchgear that is at one or more of outer perimeters of the stainless steel sheet does not have the coloured coating.

5. Metal wall according to any of claims 1-4, wherein the coloured coating of the surface of the stainless steel sheet of the metal wall that faces outwards when the metal wall forms the compartment of the switchgear comprises ink.

6. Metal wall according to any of claims 1-5, wherein the coloured coating of the surface of the stainless steel sheet of the metal wall that faces outwards when the metal wall forms the compartment of the switchgear is configured to have a high emissivity.

7. A metal conductor (1, 2) for a switchgear (100);
wherein the metal conductor comprises a copper busbar;
wherein at least a portion of a surface of copper busbar has a coloured coating; and
wherein the coloured coating has been applied by a printer.

8. A method of processing a metal wall (60) for a compartment (20, 30, 40, 50) of a switchgear (100), wherein the metal wall comprises a stainless steel sheet, and wherein the method comprises:
- applying, by a printer, a coloured coating to at least a portion of a surface of the stainless steel sheet of the metal wall that faces outwards when the metal wall forms the compartment of the switchgear.

9. Method according to claim 8, wherein the method comprises;
- applying, by the printer, a coloured coating to at least a portion of a surface of the stainless steel sheet of the metal wall that faces inwards when the metal wall forms the compartment of the switchgear

10. Method according to any of claims 8-9, wherein the stainless steel sheet comprises at least one hole, and wherein the method comprises:
- not applying, by the printer, the coloured coating to a perimeter of one or more holes of the at least one hole does of the surface of the stainless steel sheet of the metal wall that faces outwards when the metal wall forms the compartment of the switchgear.

11. Method according to any of claims 8-10, wherein the method comprises:
- not applying, by the printer, the coloured coating to one or more of outer perimeters of the stainless steel sheet of the surface of the stainless steel sheet of the metal wall that faces outwards when the metal wall forms the compartment of the switchgear.

12. Method according to any of claims 8-11, wherein prior to printing the method comprises pre-treating one or more surfaces of the stainless steel sheet with a primer.

13. Method according to any of claims 8-12, wherein the method comprises illuminating the coloured coating with UV radiation as it is being printed and/or illuminating the coloured coating with UV radiation after it has been printed.

14. A method of processing a metal conductor (1, 2) for a switchgear (100), wherein the metal conductor comprises a copper busbar, and wherein the method comprises:
- applying, by a printer, a coloured coating to at least a portion of a surface of the copper busbar.

15. A switchgear comprising a metal wall according to any of claims 1-6, and/or a metal conductor according to claim 7, and/or a metal wall processed according to the method of any of claims 8-13, and/or a metal conductor processed according to the method of claim 14.
